# EUROPÄISCHE PATENTSCHRIFT

(11) **EP 0 425 799 B1**
(45) Veröffentlichungstag und Bekanntmachung des Hinweises auf die Patenterteilung: **20.12.1995**
(21) Anmeldenummer: 90117574.5
(22) Anmeldetag: 12.09.1990
(51) Int. Cl.: H04N 9/64

(54) **Einrichtung zur Codierung von Farbfernsehsignalen**
Device for coding colour television signals
Dispositif de codage de signaux de télévision couleur

(30) Priorität: 02.11.1989 DE 3936460
(43) Veröffentlichungstag der Anmeldung: 08.05.1991
(73) Patentinhaber: Grundig E.M.V. Elektro-Mechanische Versuchsanstalt Max Grundig GmbH & Co. KG, 90762 Fürth (DE)
(72) Erfinder: Kays, Rüdiger, Dr.-Ing., Grundig E.M.V., Kurgartenstrasse 37, D-8510 Fürth/Bay (DE)

(56) Entgegenhaltungen:
- EP-A- 0 284 266
- EP-A- 0 331 985
- DE-A- 2 847 738
- US-A- 4 849 808

## Beschreibung

Die Erfindung betrifft eine Einrichtung zur Codierung von Farbfernsehsignalen mit den im Oberbegriff des Patentanspruchs 1 angegebenen Merkmalen.

Um bei der Einführung des Farbfernsehsystems die Kompatibilität zu bereits bestehenden Fernsehübertragungssystemen zu gewährleisten und eine Übertragung der Farbinformation innerhalb der vorhandenen Nachrichtenübertragungskanäle mit einer Grenzfrequenz von z. B. 5 MHz zu ermöglichen, wurden Luminanz- und Chrominanzsignal nach der Technik der Spektrenverkämmung übertragen. Bei der Spektrenverkämmung wurde zwar eine ökonomische Nutzung der Kanalbandbreite erreicht, jedoch treten bei der Decodierung der empfangenen Fernsehsignale Übersprechstörungen auf, die die Bildqualität zum Teil erheblich beeinträchtigen. Durch das Übersprechen des Luminanzsignals in den Chrominanzkanal, welches als Cross-Colour bezeichnet wird, entstehen an hochfrequenten Luminanz-Strukturen Übersprechstörungen, welche als rot-grünes bzw. blau-gelbes, wanderndes Wellenmuster erscheinen. Die Übersprechstörung des Chrominanzsignals in den Luminanzkanal, die sogenannte Cross-Luminanz, erscheint als perlschnurartiges, unbuntes Muster in Farbflächen und an Farbkanten. Beide Übersprechstörungen flackern in ruhenden Bildvorlagen mit einer Frequenz von 6,25 Kz und 18,75 Hz.

Zur Reduktion dieser Übersprechstörungen ist aus der Zeitschrift "Radio-Mentor", Heft 12, 1969, Seiten 847 bis 851, eine Einrichtung zur Codierung von Farbfernsehsignalen nach der PAL-Norm bekannt, bei der im konventionellen PAL-Coder eine analoge Signalverarbeitung mittels eines im Luminanzkanal angeordneten, abschaltbaren Notch-Filters vorgenommen wird. Durch den Einsatz dieses Notch-Filters kann zwar erreicht werden, daß empfangsseitig bei der Demodulation des Farbträgers Luminanzanteile nicht fälschlicherweise als Chrominanzsignale ausgewertet werden, damit verbunden ist jedoch eine Verringerung der Horizontalauflösung des Luminanzsignals auf einen Wert unterhalb von 4 MHz.

Im Zuge der Weiterentwicklung wurden digitale Signalverarbeitungsverfahren im PAL-Coder untersucht, bei denen die Luminanz- und Chrominanzsignale vor der Zusammenführung einer Kammfilterung unterzogen werden. In der dreidimensionelen Spektraldarstellung des Bildes entspricht die Kammfilterung einer zwei- bzw. dreidimensionalen Bandaufteilung die - bei entsprechender digitaler Signalverarbeitung im PAL-Decoder - zu einem Bild mit geringen Übersprechstörungen führen kann.

Aus der Zeitschrift "Fernseh- und Kinotechnik", 39. Jg., Heft 3, 1986, Seiten 123 bis 135, ist ein PAL-Coder und -Decoder bekannt, bei dem eine dreidimensionale Bandbegrenzung von Luminanz- und Chrominanzsignal derart vorgenommen wird, daß Luminanz- und Chrominanzsignal unterschiedliche Frequenzräume belegen. Dieser Lösungsweg wurde beim Gegenstand der deutschen Patentanmeldung P 38 07 248.3 weiter gegangen, wobei durch eine getrennte dreidimensionale Filterung der Farbdifferenzsignale jedes dieser Farbdifferenzsignale mit einer optimalen Auflösung übertragen werden kann. Zur Berücksichtigung der augenphysiologischen Gegebenheit des Farbfernsehstandards werden dabei die Durchlaßbereiche in Richtung vertikaler Ortsfrequenz und Zeitfrequenz der Filter für die beiden in Richtung der horizontalen Ortsfrequenz bandbegrenzten Farbdifferenzsignale unterschiedlich gewählt. Bei einem Farbfernsehsignal nach der PAL-Norm kann dadurch berücksichtigt werden, daß das menschliche Auge für Bewegungsverschleifungen bzgl. des Farbdifferenzsignals U wesentlich unempfindlicher ist als für Bewegungsverschleifungen bzgl. des Farbdifferenzsignals V.

Weitere Lösungskonzepte mit dreidimensionaler Filterung im Coder bzw. Decoder sind in der Zeitschrift "Fernseh- und Kino-Technik", 42 Jg., Nr. 9, 1988, Seiten 403 - 422, bzw. in der Zeitschrift "Funkschau", Nr. 1, 1989, Seiten 46 - 50, ausführlich erläutert.

Allen vorgenannten Lösungskonzepten ist gemeinsam, daß ein hoher Schaltungsaufwand im Coder bzw. Decoder erforderlich ist, um die Übersprechstörungen zu beseitigen, und daß stets ein Verlust an Detailauflösung von Luminanz und Chrominanz in Kauf genommen werden muß.

Ferner wurde in der deutschen Patentanmeldung DE-A1-3912323 (veröffentlicht am 18.10.90) vorgeschlagen, in einem Farbfernsehcoder eine zeitliche Unterabtastung von Chrominanz- und hochfrequenter Luminanzkomponente vorzunehmen. Im zugehörigen Decoder werden vom empfangenen ersten und zweiten Halbbild zur Beseitigung von Cross-Luminanz-Störungen die hochfrequenten Signalanteile des übertragenen Fernsehsignals und zur Beseitigung von Cross-Colour-Störungen die niederfrequenten Farbsignale addiert. Bei dieser Vorgehensweise bedarf es zur Erzielung eines optimalen Ergebnisses eines Zusammenwirkens von sender- und empfangsseitigen Maßnahmen.

Aus der EP-A2-0 284 266 ist eine Einrichtung zur Codierung von Farbfernsehsignalen mit den im Oberbegriff des Anspruchs 1 angegebenen Merkmalen bekannt. Bei dieser bekannten Einrichtung werden die ermittelten Korrektursignale in digitaler Form in eine nicht am Bildschirm sichtbare Zeile der Austastlücke des zu übertragenden Signals eingesetzt und zusammen mit dem Signal auf die Empfangsseite übertragen, wo die Auswertung der senderseitig ermittelten Korrektursignale erfolgt. Auch bei dieser Vorgehensweise bedarf es eines Zusammenwirkens von sender- und empfangsseitigen Maßnahmen.

Ausgehend von diesem Stand der Technik liegt der Erfindung die Aufgabe zugrunde, eine Einrichtung zur Codierung von Farbfernsehsignalen mit den im Oberbegriff des Anspruchs 1 angegebenen Merkmalen derart weiterzubilden, daß auch bei einer Bildwiedergabe mittels herkömmlicher Farbfernsehdecoder nahezu keine Übersprechstörungen auftreten.

Diese Aufgabe wird bei einer Einrichtung mit den im Oberbegriff des Anspruchs 1 angegebenen Merkmalen durch die im kennzeichnenden Teil des Anspruchs 1 angegebenen Merkmale gelöst. Vorteilhafte Weiterbildungen ergeben sich aus den Unteransprüchen.

Die Vorteile der Erfindung bestehen insbesondere darin, daß ausschließlich durch senderseitige Maßnahmen dafür gesorgt wird, daß nach einer empfangsseitigen Decodierung nahezu keine Störungen in Form von Übersprechen auftreten. Folglich kommen auch Besitzer von Fernsehgeräten mit einem herkömmlichen Farbfernsehsignaldecoder in den Genuß besserer Bilder. Weitere vorteilhafte Eigenschaften der Erfindung ergeben sich aus der Erläuterung von Ausführungsbeispielen anhand der Figuren.

Es zeigen
- Figur 1 ein Blockschaltbild zur Erläuterung einer ersten Ausführungsform,
- Figur 2 ein Blockschaltbild zur Erläuterung einer zweiten Ausführungsform, und
- Figur 3, 4 und 5 ein Diagramm bzw. Blockschaltbilder möglicher Ausführungsformen des Filters 18 von Figur 2.

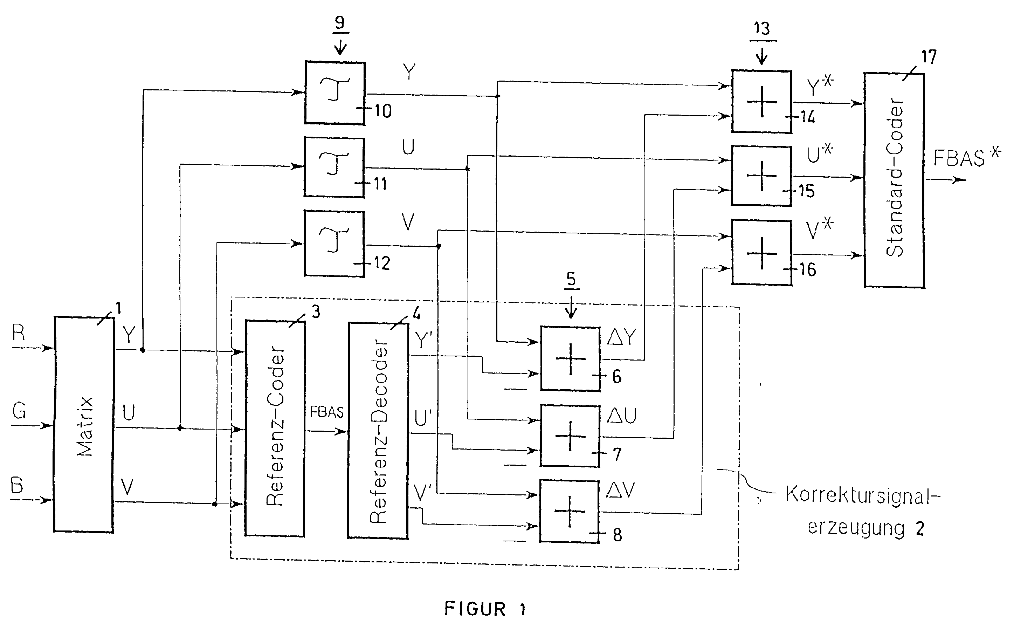

Die Figur 1 zeigt ein Blockschaltbild einer ersten Ausführungsform einer Einrichtung zur Codierung von Farbfernsehsignalen nach der Erfindung. Dem Eingang der Einrichtung werden in einer Farbfernsehkamera erzeugte RGB-Signale zugeführt. Aus diesen werden in einer Matrixschaltung 1 ein Luminanzsignal Y, ein erstes Farbdifferenzsignal U und ein zweites Farbdifferenzsignal V erzeugt. Diese Signale werden einerseits einer Verzögerungsschaltung 9 und andererseits einer Korrektursignalerzeugungsschaltung 2 zugeführt,

In der Korrektursignalerzeugungsschaltung 2 wird aus den genannten Signalen mittels eines Referenzcoders 3 ein FBAS-Signal erzeugt. Dieses wird in einem an den Ausgang des Referenzcoders 3 angeschlossenen Referenzdecoders 4 in ein Luminanzsignal Y′, ein Farbdifferenzsignal U′ und ein Farbdifferenzsignal V′ rückumgewandelt. Diese Signale Y′, U′ und V′ unterscheiden sich von den ursprünglichen Signalen Y, U und V dadurch, daß sie Übersprechanteile in Form von Cross-Colour und Cross-Luminanz enthalten.

In der Verzögerungsschaltung 9, welche für jedes der Signale Y, U und V ein Verzögerungsglied 10, 11 bzw. 12 enthält, werden die Signale um eine Zeitdauer verzögert, die der Laufzeit der Signale durch den Referenzcoder 3 und den Referenzdecoder 4 entspricht.

Die am Ausgang der Verzögerungsschaltung 9 erhaltenen Signale Y, U und V werden ebenso wie die am Ausgang des Referenzdecoders 4 erhaltenen Signale Y′, U′ und V′ einer Subtrahierstufe 5 zugeführt. Diese weist drei Subtrahierglieder 6, 7 und 8 auf. Im Subtrahierglied 6 wird das Luminanzsignal Y′ vom Luminanzsignal Y zur Bildung eines Korrektursignals ΔY subtrahiert. Im Subtrahierglied 7 wird das Farbdifferenzsignal U′ vom Farbdifferenzsignal U zur Bildung eines Korrektursignals ΔU subtrahiert. Im Subtrahierglied 8 wird das Farbdifferenzsignal V′ vom Farbdifferenzsignal V zur Bildung eines Korrektursignals ΔV subtrahiert.

Die Korrektursignale ΔY, ΔU und ΔV werden ebenso wie die Ausgangssignale Y, U und V der Verzögerungsschaltung 9 einer Addierstufe 13 zugeführt. Diese weist drei Addierglieder 14, 15 und 16 auf. Im Addierglied 14 wird das Korrektursignal ΔY zum Luminanzsignal Y zur Bildung eines modifizierten Luminanzsignals Y* addiert. Im Addierglied 15 wird das Korrektursignal ΔU zum Farbdifferenzsignal U zur Bildung eines modifizierten Farbdifferenzsignals U* addiert. Im Addierglied 16 wird das Korrektursignal ΔV zum Farbdifferenzsignal V zur Bildung eines modifizierten Farbdifferenzsignals V* addiert.

Vorstehend wurden die Subtrahierstufen 5 und die Addierstufe 13 als separate Bauteile beschrieben. Es ist ohne weiteres denkbar, diese Bauteile in einer Funktionseinheit zusammenzufassen, an deren Ausgang die genannten Signal Y*, U* und V* zur Verfügung stehen.

Die modifizierten Signale Y*, U* und V* werden in einem Coder 17 in ein modifiziertes FBAS-Signal FBAS* umgewandelt. Dieses modifizierte FBAS-Signal FBAS* wird zum Empfänger übertragen und kann von dessen Decoder decodiert werden, ohne daß Übersprechstörungen in Form von Cross-Colour und Cross-Luminanz auftreten.

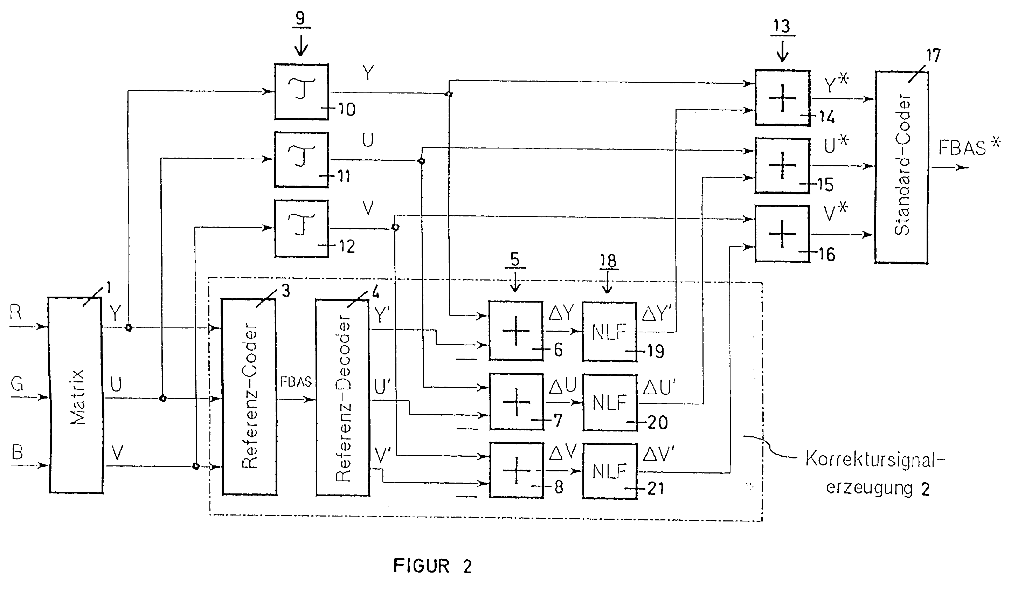

Die Figur 2 zeigt ein Blockschaltbild einer zweiten Ausführungsform einer Einrichtung zur Codierung von Farbfernsehsignalen nach der Erfindung, die sich von der in Figur 1 gezeigten Ausführungsform nur durch das zwischen die Subtrahierstufe 5 und die Addierstufe 13 geschaltete Filter 18 untersclieidet. Dieses weist drei Teilfilter 19, 20 und 21 auf, in denen aus den am Ausgang der Subtrahierstufe 5 erhaltenen Korrektursignalen ΔY, ΔU und ΔV, welche jeweils sowohl Übersprechkomponenten enthalten, die auf der Empfangsseite sichtbare Störungen hervorrufen, als auch Übersprechkomponenten, die unterhalb der Wahrnehmungsschwelle liegen, durch eine - vorzugsweise nichtlineare - Filterung modifizierte Korrektursignale ΔY′, ΔU′ und ΔV′ gebildet werden, die nur noch diejenigen Übersprechkomponenten enthalten, die sichtbaren Störungen entsprechen.

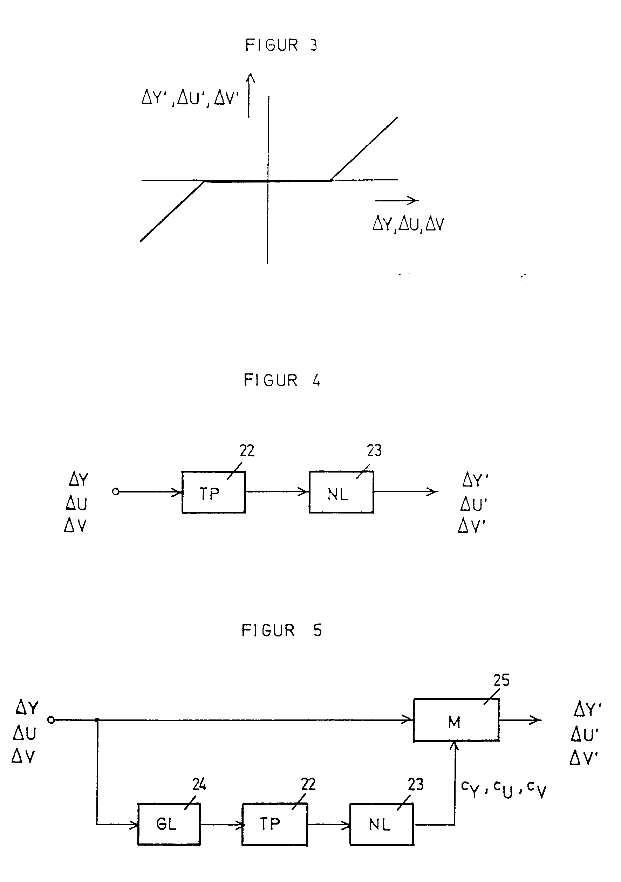

Eine mögliche Realisierung dieser nichtlinearen Filterung besteht darin, daß beispielsweise mittels einer PROM-Tabelle einem Korrektursignal ΔY (bzw. ΔU, ΔV) ein modifiziertes Korrektursignal ΔY′ (bzw. ΔU′, ΔV′) zugeordnet wird, welches bei kleinen Amplituden des Korrektursignals ΔY (bzw. ΔU, ΔV) die Amplitude O aufweist und mit ansteigender Amplitude des Korrektursignals ΔY (bzw. ΔU, ΔV) linear ansteigt. Eine Kennlinie, die diese Zuordnung beschreibt, ist in Figur 3 gezeigt.

Eine vorteilhafte Weiterbildung der in Figur 3 gezeigten Filterung ist in Figur 4 beschrieben. Gemäß dieser Weiterbildung ist vor der nichtlinearen Filterung zusätzlich eine lineare Filterung, vorzugsweise eine Tiefpaßfilterung,vorgesehen. Dadurch wird der Tatsache Rechnung getragen, daß hochfrequente Störmuster als weniger störend empfunden werden als niederfrequente.

Eine weitere Ausführungsform der Filter 19, 20, 21 ist in Figur 5 dargestellt. Gemäß dieser Ausführungsform wird das Korrektursignal ΔY (bzw. ΔU, ΔV) zur Ermittlung eines Korrekturfaktors c_{Y} (bzw. c_{U}, c_{V}) über einen Gleichrichter 24, einen Tiefpaß 22 und ein nichtlineares Glied 23 geleitet. Der ermittelte Korrekturfaktor c_{Y} (bzw. c_{U} c_{V}) wird zur Bildung von modifizierten Korrektursignalen ΔY′ (bzw. ΔU′, ΔV′) mit den Korrektursignalen ΔY (bzw. ΔU, ΔV) multipliziert.

Der wesentliche Vorteil der oben beschriebenen Einrichtungen zur Codierung von Farbfernsehsignalen besteht darin, daß das Auftreten von Übersprechstörungen wie Cross-Colour und Cross-Luminanz ausschließlich durch senderseitige Maßnahmen nahezu unterbunden wird. Folglich ist eine Wiedergabe von Farbfernsehsignalen, die nahezu keine Übersprechstörungen enthalten, auch mittels herkömmlicher Empfänger möglich.

Der Grad der Reduktion der Übersprechstörungen ist davon abhängig, wie genau der empfangsseitige Decoder dem Referenzdecoder 4 entspricht. Sehr gute Ergebnisse lassen sich beispielsweise erzielen, wenn als Referenzdecoder ein adaptiver Kammfilterdecoder verwendet wird, wie er in jüngster Zeit bekannt wurde,und auch empfangsseitig ein derartiger Decoder zur Verfügung steht.

## Patentansprüche

1. Einrichtung zur Codierung von Farbfernsehsignalen, mit
- einer Matrixschaltung (1) zur Umwandlung von R, G, B-Eingangssignalen in ein Luminanzsignal und zwei Farbdifferenzsignale,
- einem Farbfernsehsignalcoder (3) zur Umwandlung eines Luminanzsignals und zweier Farbdifferenzsignale in ein zusammengesetztes Farbfernsehsignal, und
- einer Schaltung (2) zur Erzeugung von Korrektursignalen (ΔY, ΔU, ΔV), welche Übersprechstörkomponenten enthalten,
**dadurch gekennzeichnet,** daß sie eine Schaltung (13) zur Überlagerung der Korrektursignale (ΔY, ΔU, ΔV) mit den Ausgangssignalen (Y, U, V) der Matrixschaltung (1) aufweist.

2. Einrichtung nach Anspruch 1, **dadurch gekennzeichnet,** daß sie aufweist:
- einen zweiten Farbfernsehsignalcoder (3) zur Umwandlung der Ausgangssignale (Y, U, V) der Matrixschaltung (1) in ein zusammengesetztes Farbfernsehsignal (FBAS),
- einen an den Ausgang des zweiten Farbfernsehsignalcoders (3) angeschlossenen Farbfernsehsignaldecoder (4) zur Erzeugung von übersprechstörbehafteten Signalen (Y′, U′, V′),
- eine Verzögerungsschaltung (9) zur Verzögerung der Ausgangssignale (Y, U, V) der Matrixschaltung (1) um eine Zeitdauer, die der Laufzeit der Signale durch den zweiten Farbfernsehsignalcoder (3) und den Farbfernsehsignaldecoder (4) entspricht,
- eine Subtrahierstufe (5), in der die übersprechstörbehafteten Signale (Y′, U′, V′) von den Ausgangssignalen (Y, U, V) der Verzögerungsschaltung (9) zur Bildung der Korrektursignale (ΔY, ΔU, ΔV) subtrahiert werden, und
- eine Addierstufe (13), in der eine Addition der Korrektursignale (ΔY, ΔU, ΔV) und der Ausgangssignale (Y, U, V) der Verzögerunsschaltung (9) zur Bildung eines modifizierten Luminanzsignals (Y*) und modifizierter Farbdifferenzsignale (U*, V*) erfolgt, welche dem ersten Farbfernsehsignalcoder (17) zugeführt werden.

3. Einrichtung nach Anspruch 2, **dadurch gekennzeichnet,** daß sie weiterhin ein zwischen den Ausgang der Subtrahierstufe (5) und die Addierstufe (13) geschaltetes Filter (18) enthält, welches für Korrektursignalkomponenten, die unterhalb der Wahrnehmbarkeitsschwelle liegen, undurchlässig ist.

4. Einrichtung nach Anspruch 3, **dadurch gekennzeichnet**, daß das Filter (18) eine nichtlineare Übertragungscharakteristik aufweist.

5. Einrichtung nach Anspruch 3, **dadurch gekennzeichnet,** daß das Filter (18) eine Reihenschaltung eines Tiefpasses (22) und einer Nichtlinearität (23) aufweist.

6. Einrichtung nach Anspruch 3, **dadurch gekennzeichnet,** daß das Filter (18) eine Reihenschaltung eines Gleichrichters (24), eines Tiefpasses (22) und einer Nichtlinearität (23) zur Ermittlung eines Korrekturfaktors (c_{Y}, c_{U}, c_{V}) sowie einen Multiplizierer (25) enthält, in welchem das Korrektursignal (ΔY, ΔU, ΔV) mit dem Korrekturfaktor (c_{Y}, c_{U}, c_{V}) multipliziert wird.

## Claims

1. Device for coding colour television signals comprising
- a matrix circuit (1) for converting R, G, B input signals into a luminance signal and two colour difference signals,
- a colour television coder (3) for converting a luminance signal and two colour difference signals into a composite colour television signal, and
- a circuit (2) for generating correction signals (ΔY, ΔU, ΔV) which contain crosstalk components,
characterized in that it has a circuit (13) for superimposing the correction signals (ΔY, ΔU, ΔV) with the output signals (Y, U, V) of the matrix circuit (1).

2. Device according to Claim 1, characterized in that it has:
- a second colour television coder (3) for converting the output signals (Y, U, V) of the matrix circuit (1) into a composite colour television signal (CCVS),
- a colour television signal decoder (4) connected to the output of the second colour television signal coder (3) for generating signals (Y′, U′, V′) which are subject to crosstalk,
- a delay circuit (9) for delaying the output signals (Y, U, V) of the matrix circuit (1) by a time which corresponds to the transit time of the signals through the second colour television signal coder (3) and the colour television signal decoder (4),
- a subtracting stage (5) in which the signals (Y′, U′, V′) which are subject to crosstalk are subtracted from the output signals (Y, U, V) of the delay circuit (9) to form the correction signals (ΔY, ΔU, ΔV), and
- an adding stage (13) in which an addition of the correction signals (ΔY, ΔU, ΔV) and of the output signals (Y, U, V) of the delay circuit (9) is carried out to form a modified luminance signal (Y*) and modified colour difference signals (U*, V*) which are fed to a first colour television signal coder (17).

3. Device according to Claim 2, characterized in that it furthermore contains a filter (18) which is connected between the output of the subtracting stage (5) and the adding stage (13) and which does not transmit correction-signal components which are below the threshold of perceptibility.

4. Device according to Claim 3, characterized in that the filter (18) has a nonlinear transmission characteristic.

5. Device according to Claim 3, characterized in that the filter (18) is a series circuit of a low-pass filter (22) and a nonlinear component (23).

6. Device according to Claim 3, characterized in that the filter (18) contains a series circuit of a rectifier (24), a low-pass filter (22) and a nonlinear component (23) for determining a correction factor (c_{Y}, c_{U}, c_{V}) and a multiplier (25) in which the correction signal (ΔY, ΔU, ΔV) is multiplied by the correction factor (c_{Y}, c_{U}, c_{V}).

## Revendications

1. Dispositif pour coder des signaux de télévision en couleurs, comportant
- un circuit matriciel (1) pour convertir des signaux d'entrée R, V, B en un signal de luminance et en deux signaux de différence de couleurs,
- un codeur (3) des signaux de télévision en couleurs pour convertir un signal de luminance et deux signaux de différence de couleurs en un signal composite de télévision en couleurs, et
- un circuit (2) pour produire des signaux de correction (ΔY, ΔU, ΔV), qui contiennent des composantes parasites de diaphonie,
caractérisé en ce qu'il comporte un circuit (13) pour superposer les signaux de correction (ΔY, ΔU, ΔV) aux signaux de sortie (Y,U,V) du circuit matriciel (1).

2. Dispositif selon la revendication 1, caractérisé en ce qu'il comprend :
- un second codeur (3) de signaux de télévision en couleurs pour convertir les signaux de sortie (Y,U,V) du circuit matriciel (1) en un signal composite de télévision en couleurs (FBAS),
- un décodeur (4) des signaux de télévision en couleurs, raccordé à la sortie du second codeur (3) des signaux de télévision en couleurs, pour produire des signaux (Y′, U′,V′) affectés de parasites de diaphonie,
- un circuit de retardement (9) servant à retarder les signaux de sortie (Y,U,V) du circuit matriciel (1) d'une durée qui correspond au temps de propagation des signaux dans le second décodeur (3) des signaux de télévision en couleurs et dans le décodeur (4) des signaux de télévision en couleurs,
- un étage soustracteur (5), dans lequel les signaux (Y′, U′,V′) affectés de parasites de diaphonie, sont soustraits des signaux de sortie (Y,U,V) du circuit de retardement (9) pour la formation des signaux de correction (ΔY,ΔU,ΔV), et
- un étage additionneur (5), dans lequel une addition des signaux de correction (ΔY,ΔU,ΔV) et des signaux de sortie (Y,U,V) du circuit de retardement (9) est exécuté pour la formation d'un signal de luminance modifié (Y*) et de signaux modifiés de différence de couleurs (U*, V*), qui sont envoyés au premier codeur (17) des signaux de télévision en couleurs.

3. Dispositif selon la revendication 2, caractérisé en ce qu'il contient en outre un filtre (18) branché entre la sortie de l'étage soustracteur (5) et l'étage additionneur (13) et qui bloque des composantes de signaux de correction, qui sont situées à un niveau inférieur au niveau de détection.

4. Dispositif selon la revendication 3, caractérisé en ce que le filtre (18) possède une caractéristique de transfert non linéaire.

5. Dispositif selon la revendication 3, caractérisé en ce que le filtre (18) comporte un circuit série formé d'un filtre passe-bas (22) et d'un élément non linéaire (23).

6. Dispositif selon la revendication 3, caractérisé en ce que le filtre (18) contient un circuit série formé par un redresseur (24), un filtre passe-bas (22) et un élément non linéaire (23) pour la détermination d'un facteur de correction (c_{Y}, c_{U}, c_{V}) ainsi qu'un multiplicateur (25), dans lequel le signal de correction (ΔY, ΔU, ΔV) est multiplié par le facteur de correction (c_{Y}, c_{U}, c_{V}).
